# EUROPÄISCHE PATENTSCHRIFT

(11) **EP 4 187 238 B1**
(45) Veröffentlichungstag und Bekanntmachung des Hinweises auf die Patenterteilung: **30.07.2025**
(21) Anmeldenummer: 22209544.0
(22) Anmeldetag: 25.11.2022
(51) Int. Cl.: G01N 27/22

(54) **ANORDNUNG UND VERFAHREN ZUR FEUCHTIGKEITSMESSUNG IN BAUWERKEN**
ARRANGEMENT AND METHOD FOR MEASURING MOISTURE IN BUILDINGS
DISPOSITIF ET PROCÉDÉ DE MESURE DE L'HUMIDITÉ DANS DES BÂTIMENTS

(30) Priorität: 30.11.2021 DE 102021131367
(43) Veröffentlichungstag der Anmeldung: 31.05.2023
(73) Patentinhaber: Horeich UG (haftungsbeschränkt), 91052 Erlangen (DE)
(72) Erfinder: Hoppe, Fabian, Erlangen (DE); Reichle, Andreas, Erlangen (DE)
(74) Vertreter: Sperling, Thomas

(56) Entgegenhaltungen:
- EP-A1- 3 462 156
- DE-A1- 102008 035 658
- DE-A1- 102011 056 548
- DE-A1- 102019 134 398
- US-A1- 2017 205 308

## Beschreibung

Die Erfindung betrifft eine Anordnung zur Feuchtigkeitsmessung in Bauwerken, nach Anspruch 1.

Die Erfindung betrifft auch ein Verfahren zur Feuchtigkeitsmessung in Bauwerken nach Anspruch 6.

Insbesondere betrifft die Erfindung eine Anordnung und ein Verfahren zur Messung einer Feuchtigkeit entlang einer Messstrecke an beziehungsweise in Bauwerken und in Fugen von Bauwerken, um eindringende Feuchtigkeit beziehungsweise Flüssigkeiten im laufenden Betrieb rechtzeitig zu detektieren. Drüber hinaus kann eine derartige Messung einer Feuchtigkeit auch an Teilen von Bauwerken oder Einrichtungen wie beispielsweise Rohrleitungen erfolgen, um austretende Feuchtigkeit beziehungsweise Flüssigkeiten rechtzeitig zu detektieren.

Bauwerke wie beispielsweise Brücken, Tunnel, Schachtanlagen, Anlagen der Versorgungsinfrastruktur und andere mehr weisen häufig flexible und für einen Temperaturausgleich vorgesehene Fugen auf, die eine große längliche Ausdehnung besitzen und wasserdicht überbrückt beziehungsweise abgedichtet werden müssen. Derartige Fugen beziehungsweise Schnittstellen stellen eine Schwachstelle im System des Bauwerks dar und bieten Eintrittsmöglichkeiten für Wasser und andere Flüssigkeiten. Dies ist insbesondere dann der Fall, wenn die Überbrückung beziehungsweise Abdichtung wie beispielsweise eine dichtende Gummilippe beschädigt wird oder verschleißt. In diesen Fällen können Risse, Poren oder Löcher entstehen, durch welche Wasser und andere Flüssigkeiten in die Fuge eindringen können.

Durch auftretende chemische und physikalische Prozesse führen eindringende Flüssigkeiten zur Beschädigung der Substanz der Bauwerke. Fugen in genannten Bauwerken sind zudem häufig starken Belastungen ausgesetzt, einerseits durch innere Kräfte aufgrund von Temperaturwechselzyklen und andererseits durch wiederkehrende dynamische möglicherweise wechselnde äußere Krafteinwirkungen. Derartige starke Belastungen werden beispielsweise durch den Schwerlastverkehr an Infrastrukturbauwerken wie Brücken verursacht.

Typischerweise sind beispielsweise Brückenbauten stark von Degradierung betroffen. Unter der Degradierung wird insbesondere eine Beschädigung der Bausubstanz wie der Bewehrung oder Armierung von Bauwerken durch eindringende Flüssigkeiten wie Salzlauge verstanden.

Insbesondere Übergangskonstruktionen, die in der Fahrbahnebene als ausgleichende Fuge die Schnittstelle zwischen einem sogenannten Widerlager und der Brücke bilden, sind beispielsweise durch ständige LKW- und PKW-Überfahrten durchgehend belastet. Die meist aus zwei Stahlhälften mit dichtender Gummilippe ausgeführte Fuge beziehungsweise Übergangskonstruktionen kann materialbedingt, durch Fehler beim Einbau, durch einen Eintrieb spitzer Gegenstände in die dichtende Gummilippe oder durch Materialversagen aufgrund der weichen Materialeigenschaften von Kunststoffen unvorhersehbar undicht werden.

Diese Undichtigkeiten erlauben Flüssigkeiten wie Wasser in das Bauwerk wie beispielsweise die Brücke einzudringen. Neben Wasser kann insbesondere im Winter stark korrosionsbeschleunigende Salzlauge in das Bauwerk eindringen, wenn zur Glatteisvorbeugung entsprechende Streumittel eingesetzt werden.

Die Folge ist, dass Bereiche des Bauwerks wie darunterliegend Betonschichten sowie Bewehrungsstahl zersetzt werden, also Teile des Bauwerks, welche für die Tragfähigkeit des Bauwerks essential wichtig sind. Somit ist es notwendig, aufwändige Sanierungsmaßnahmen, einen Teilweisen oder im Extremfall vollständigen Neubau des Bauwerks vorzunehmen, um statische Eigenschaften des Bauwerks wie die Tragfähigkeit einer Brücke zu erhalten oder wiederherzustellen.

Die durch Nutzung und Umwelteinflüsse entstehenden Schäden an Infrastrukturbauwerken verursachen jährlich immense Instanthaltungskosten. Um durch Früherkennung von Defekten Kosten einzusparen und sicherheitsrelevante Probleme aufzudecken, werden in regelmäßigen Abständen Inspektionen an Bauwerken vorgenommen. Aktuell werden diese überwiegend von Fachpersonal vorgenommen. Ein Hauptnachteil manueller Überprüfungen liegt jedoch darin, dass Schäden nicht rechtzeitig oder erst gar nicht erkannt werden, insbesondere an schwer zugänglichen Stellen der Bauwerke, wie beispielsweise Fugen.

Aus dem Stand der Technik sind mehrere Lösungen für ein Ermittlung einer Feuchtigkeit bekannt.

Die EP 3 462 156 A1 betrifft ein System und ein Verfahren zur Erkennung und Lokalisierung eines Lecks in einer Gebäudeschicht. Die zu lösende Aufgabe besteht darin, ein Leck an jedem Punkt der Gebäudeschicht schnell und genau zu erkennen und zu lokalisieren. Zur Lösung dieser Aufgabe umfasst das System mindestens einen Sensorarray-Steuerschaltkreis und mindestens ein Erfassungsmodul oder ein Array von Erfassungsmodulen, die operativ mit dem Sensorarray-Steuerschaltkreis verbunden sind.

Die DE 10 2019 134 398 A1 betrifft eine Vorrichtung sowie ein Verfahren zum Erkennen und Orten von Leckagen beziehungsweise Feuchteansammlungen beispielsweise in Dächern beziehungsweise Gebäudestrukturen. Die zu lösende Aufgabe besteht darin, das Eindringen und Ansammeln von Feuchtigkeit beziehungsweise Wasser in Dächern beziehungsweise Gebäudestrukturen zuverlässig zu erkennen und zu verorten, den Montage-, Installations- und Materialaufwand für entsprechende Überwachungseinrichtungen zu reduzieren sowie eine individuelle Anpassung dieser Überwachungseinrichtungen an die Struktur eines Daches beziehungsweise Gebäudeteils zu ermöglichen. Zur Lösung dieser Aufgabe umfasst die Vorrichtung eine Mehrzahl von nebeneinander angeordneten, nicht-isolierten elektrisch leitenden Leiterbahnen und ein Trägerband, an dem die Leiterbahnen fixiert sind. Das Trägerband ist dabei derart gestaltet, dass es auf der feuchteführenden Fläche und/oder in der feuchteführenden Schicht angebracht werden kann.

Aus der US 2017/205308 A1 sind ein System und ein Verfahren zur Früherkennung von Flüssigkeiten bekannt. Das System umfasst mindestens eine Sensorkachel, wobei jede Sensorkachel eine erste Vielzahl von leitfähigen Leitungen umfasst, die an einer ersten Seite eines Substrats befestigt sind, und eine zweite Vielzahl von Leitungen, die an einer zweiten Seite eines Substrats befestigt sind. In einer bevorzugten Ausführungsform ist die erste Mehrzahl von Leiterbahnen um 90 Grad versetzt in Bezug auf die zweite Mehrzahl von Leiterbahnen angeordnet. Das System enthält außerdem mindestens einen Prozessor, der über mindestens zwei Multiplexerteile betriebsbereit mit der ersten und zweiten Mehrzahl von Leiterbahnen verbunden ist. Die Sensorkacheln, Multiplexerteile und der Prozessor sind durch leitende Anschlüsse miteinander verbunden.

Aus der DE 10 2011 056548 A1 sind eine Messeinrichtung sowie ein Verfahren zum Ermitteln des Feuchtegehaltes eines zu untersuchenden Materials bekannt. Die zu lösende Aufgabe besteht darin, eine Feuchtemesssensorik zur Verfügung zu stellen, welche direkt vor Ort einsetzbar ist, keine Zerstörung des Messobjektes zur Folge hat, eine wiederholte Messung an der gleichen Stelle erlaubt und darüber hinaus hoch zuverlässige Messergebnisse liefert. Diese Aufgabe wird einerseits durch eine Messeinrichtung und andererseits durch ein Verfahren der oben genannten Gattung gelöst, wobei die Messeinrichtung wenigstens einen Feuchtesensor mit wenigstens zwei elektrisch leitfähigen, in einem Abstand zueinander in oder auf einem feuchtigkeitsdurchlässigen Basismaterial fixierten Elektroden aufweist und wobei der wenigstens eine Feuchtesensor ein kapazitiver Sensor ist, der zum Ermitteln des Feuchtegehaltes in dem zu untersuchenden Material eingebracht ist.

Die DE 10 2008 035 658 A1 betrifft eine Vorrichtung zur kapazitiven Feuchtemessung einer aus mehreren Schichten eines vorzugsweise hygroskopischen Materials bestehenden Verbundstruktur. Die zu lösende Aufgabe besteht darin, eine Vorrichtung und ein Verfahren anzugeben, mit der beziehungsweise mit dem eine einfache und genaue Feuchtebestimmung, in einer vorzugsweise ein hygroskopisches Material und/oder zumindest eine hygroskopische Klebstoffschicht aufweisenden, Verbundstruktur, möglich ist, sowie ein Verfahren zur Herstellung einer solchen Verbundstruktur anzugeben. Zur Lösung weist eine Vorrichtung eine aus mehreren Schichten eines, vorzugsweise hygroskopischen, Materials bestehenden Verbundstruktur auf, die zumindest eine, vorzugsweise hygroskopische, Klebstoffschicht enthält, und einen Sensor, mit einem ersten Sensorelement und einem zweiten Sensorelement, von denen wenigstens ein Sensorelement mit der Klebstoffschicht in Kontakt ist.

Aus der DE 102 53 913 A1 ist ein kapazitiver Feuchtigkeitssensor bekannt, welcher ein Paar von kammförmigen Elektroden aufweist. Die zu lösende Aufgabe besteht darin, trotz eines kleinen zur Verfügung stehenden Substratoberflächenbereichs eine große Kapazitätsänderungen wirksam zu erzielen.

Zur Lösung ist es angegeben, dass ein kapazitiver Feuchtigkeitssensor mittels zweier ineinandergreifender Elektroden mit einer kammartigen Struktur auf einer Oberfläche eines Substrats gebildet wird.

Die DE 11 2008 000 998 T5 beschreibt einen Sensor für Feuchtigkeit, welcher das Prinzip einer Kapazitätsveränderung oder einer Widerstandsveränderung nutzt und ein Verwaltungssystem für einen derartigen Sensor anbindet. Die zu lösende Aufgabe besteht darin, einen Feuchtigkeitssensor und ein Verwaltungssystem bereitzustellen, die eine hohe Genauigkeit, einen sehr geringen Stromverbrauch und einen vereinfachten Aufbau aufweisen. Außerdem sollen sie wirtschaftlich und geeignet für die Benutzung in der Landwirtschaft, Fischerei, Forstwirtschaft, Medizin, Hygiene und Industrie sein.

Zur Lösung dieser Aufgabe ist es angegeben, dass ein Feuchtigkeitssensor umfasst:
- zwei Elektrodenpads mit Wasserdurchlässigkeit und Leitfähigkeit,
- eine Absorptionsschicht zum Absorbieren von Feuchtigkeit, wobei die Absorptionsschicht zwischen den zwei Elektrodenpads angeordnet ist, und
- eine Messeinheit zum Detektieren von Feuchtigkeit durch eine Widerstandsveränderung zwischen den zwei Elektrodenpads.

Diese Lösungen aus dem Stand der Technik ermöglichen lediglich eine punktuelle Überwachung einer Feuchtigkeit beziehungsweise eines Eindringens einer Flüssigkeit. Eine Überwachung größerer Bereiche ist nicht möglich.

Somit besteht Bedarf an einem technischen System, welches Bauwerke oder Bauwerksteile insbesondere bezüglich auftretender beziehungsweise eindringender Feuchtigkeit entlang einer Messstrecke wie beispielsweise einer Fuge überwacht und bei signifikanten Ausschlägen beziehungsweise dem Erkennen auftretender beziehungsweise eindringender Feuchtigkeit ein entsprechendes Ausgangssignal bereitstellt, um beispielsweise zuständige Instanthalter zu verständigen und schnelle Vorbeugungsmaßnahmen einzuleiten.

Die Aufgabe der Erfindung besteht nunmehr darin, eine Anordnung und ein Verfahren zur Feuchtigkeitsmessung entlang einer Messstrecke anzugeben, womit eine auftretende Feuchtigkeit, eine eindringende oder austretende Flüssigkeit in oder aus Bauwerken oder Bauwerksteilen oder in Bauwerksfugen eindringende Feuchtigkeit oder Flüssigkeiten sicher und frühzeitig detektiert werden.

Bei einer Überschreitung eines vorgegebenen Grenzwerts beziehungsweise Feuchtigkeitsgrenzwerts wird mittels der Anordnung und des Verfahrens zur Messung einer Feuchtigkeit ein Warnsignal erzeugt und ausgegeben.

Durch eine frühzeitige Detektion einer Feuchtigkeit oder einer Flüssigkeit verbunden mit einer entsprechenden Warnung kann die Zeit zur Erkennung eines Defekts oder einer Undichtigkeit deutlich verringert werden. Somit können Gegenmaßnahmen schnell und mit niedrigem finanziellem Aufwand durchgeführt werden und aufwändige Sanierungsmaßnahmen vermieden werden. Hierbei soll eine Warnung bei einem Überschreiten eines vorgegebenen Feuchtigkeitsgrenzwerts erzeugt und ausgegeben werden.

Die Aufgabe wird durch eine Anordnung mit den Merkmalen gemäß Patentanspruch 1 der selbstständigen Patentansprüche gelöst. Weiterbildungen sind in den abhängigen Patentansprüchen angegeben.

Die Aufgabe wird auch durch ein Verfahren mit den Merkmalen gemäß Patentanspruch 6 der selbstständigen Patentansprüche gelöst. Weiterbildungen sind in den abhängigen Patentansprüchen angegeben.

Vorgesehen ist es, dass die erfindungsgemäße Anordnung beispielsweise in ein Bauwerk oder eine Fuge in einem Bauwerk eindringende Feuchtigkeit mittels einer mit Messelektroden verbundenen Signalverarbeitungselektronik, welche gegebenenfalls mit weiteren Baugruppen zur Analyse und Auswertung von Messwerten verbunden ist, detektiert. Erkennt die erfindungsgemäße Anordnung eine eindringende Feuchtigkeit, erzeugt sie ein entsprechendes Warnsignal, welches durch die erfindungsgemäße Anordnung ausgegeben wird. Vorgesehen ist es, dass neben erzeugten Messwerten auch das Warnsignal bei einem Überschreiten eines vorgegebenen Feuchtigkeitsgrenzwerts erzeugt und ausgegeben wird.

Neben einem Eindringen einer Feuchtigkeit oder Flüssigkeit in ein Bauwerk, ein Bauwerksteil oder eine Fuge in einem Bauwerk kann auch eine austretende Feuchtigkeit oder Flüssigkeit aus Bauwerken, Bauwerksteilen oder Rohrleitungen detektiert werden. Derart kann beispielsweise eine undichte Rohrleitung oder ein undichter Tank oder ein undichtes Schwimmbecken aufgefunden werden und entsprechende Gegenmaßnahmen eingeleitet werden.

Außerdem kann eine auftretende Feuchtigkeit in Bauwerken, Fugen oder Teilen von Bauwerken wie Kellern oder Kanälen detektiert werden, welche ihre Ursache beispielsweise in Kondensationsvorgängen hat.

Nachfolgend beschränkt sich die Beschreibung auf eine Überwachung einer eindringenden Feuchtigkeit oder Flüssigkeit entlang einer Messstrecke wie einer Fuge an einem Bauwerk. Hierdurch werden die Einsatzmöglichkeiten der vorliegenden Erfindung nicht beschränkt.

Vorgesehen ist es, dass die erfindungsgemäße Anordnung zur Feuchtigkeitsmessung ein autark arbeitendes System ist, welches mittels einer Batterie oder eines Akkumulators mit elektrischer Energie versorgt wird.

Ausführungen der Anordnung zur Feuchtigkeitsmessung mit einer festen Stromversorgung sind ebenfalls möglich. Systeme nach dem Stand der Technik benötigen üblicherweise eine fest installierte Stromversorgung.

Vorgesehen ist es auch, dass die Signalverarbeitungselektronik mit zwei längserstreckten Messelektroden verbunden ist, welche entlang einer Messstrecke an oder in einem Bauwerk oder Bauwerksteil beziehungsweise entlang einer Fuge eines Bauwerks angeordnet sind. Eine derartige Fuge kann beispielsweise eine flexible und für einen temperaturbedingten Längenausgleich vorgesehene Fuge wie eine Dehnfuge einer Straßenbrücke sein, welche sich über einen Teil oder die gesamte Breite der Fahrbahn der Brücke erstreckt. Hierbei kann eine Länge einer beispielhaft zu überwachenden Fuge eines Bauwerks wenige Meter bis beispielsweise bis etwa 100 m betragen und somit beispielsweise eine Fahrbahn oder die Breite mehrere parallel angeordneter Fahrbahnen beispielsweise auf einer Straßenbrücke umfassen.

Unter dem Begriff der längserstreckten Messelektroden werden Messelektroden verstanden deren Längserstreckung ein Vielfaches ihrer Erstreckung in einer Breite oder einer Höhe beträgt. So weist eine derartige Messelektrode eine Länge von 20 m, 50 m oder bis zu 100 m auf, während beispielsweise ihr runder Querschnitt nur in einem Bereich zwischen 0,25 mm² und 10 mm² liegt.

Die von der Signalverarbeitungselektronik mittels der Messelektroden erfassten Messwerte werden gespeichert und können bei Bedarf oder regelmäßig an eine zentrale Verarbeitungseinheit übertragen werden. Ebenso kann ein von der Signalverarbeitungselektronik erkanntes Eindringen von Feuchtigkeit in die zu überwachende Fuge oder ähnliches beispielsweise als ein Warnsignal an die zentrale Verarbeitungseinheit übertragen werden.

Vorgesehen ist es, dass eine Signalübertragung von Messwerten und/oder einem Warnsignal der Signalverarbeitungselektronik neben einer drahtgebundenen Übertragung insbesondere mittels eines drahtlos übertragbaren Funksignals an die zentrale Verarbeitungseinheit erfolgt. Hierbei kann eine Übertragung der Messwerte und/oder des Warnsignals paketorientiert beispielsweise über das Internet erfolgen. Ebenfalls ist eine Übertragung der Messwerte mittels der LPWAN-Technologie (Low Power Wide Area Network/Niedrigenergieweitverkehrnetz) vorgesehen. Alternativ ist eine Übertragung von Informationen auch als SMS, E-Mail oder telefonischer Sprachanruf über ein Mobilfunknetz oder das Festnetz möglich. Bisher bekannte Systeme benötigen meist eine Datenleitung beziehungsweise einen physischen Internetanschluss, um Daten zu loggen und weiterzuleiten.

Wird ein derartiges, ein Eindringen einer Feuchtigkeit in den Bereich der Messstrecke in die zu überwachende Fuge signalisierendes, Warnsignals von der zentralen Verarbeitungseinheit empfangen, ermöglicht dies das Ergreifen von kostengünstigen Sofortmaßnahmen wie einem Austauschen der Gummilippe über der Fuge und verhindert somit Schäden an der eigentlichen Bausubstanz.

Vorgesehen ist es, dass eine Überwachung beispielsweise einer Fuge über die gesamte Länge der Fuge mittels der entlang der Längserstreckung der Fuge angeordneten paarweisen Messelektroden über eine Länge von bis zu 100 m erfolgt. Systeme nach dem Stand der Technik haben den Nachteil, dass das Detektieren einer Feuchtigkeit nicht entlang der länglichen Ausdehnung von Fugen sondern nur punktuell möglich ist.

Die Signalverarbeitungselektronik führt mittels der angeschlossenen Messelektroden, welche einen kapazitiven Sensor beziehungsweise einen Kondensator beispielsweise entlang der gesamten Messstrecke ausbilden, eine Kapazitätsmessung durch, um Feuchtigkeit oder ein Eindringen einer Flüssigkeit zu detektieren.

Ein Kapazitätswert beziehungsweise eine Veränderung des Kapazitätswerts des kapazitiven Sensors wird mit einer Messschaltung gemessen, welche durch die Signalverarbeitungselektronik bereitgestellt wird. Aufgrund der hohen Dielektrizitätszahl der auftretenden Messsubstanzen wie beispielsweise Wasser, Salzwasser oder Salzlauge baut das System auf einem kapazitiven Messprinzip auf und nutzt gleichzeitig zwei voneinander isolierte Messelektroden, damit durch die leitenden Substanzen keine leitende Verbindung zwischen diesen Messelektroden hergestellt werden kann. Die Messschaltung der Signalverarbeitungselektronik detektiert eine Feuchtigkeit oder eine eindringende Flüssigkeit wie Wasser, Salzwasser oder Salzlauge sowohl für den Fall, dass die Messsubstanzen zwischen die beiden parallel zueinander angeordneten Messelektroden gelangt, als auch für den Fall, dass die Messsubstanzen in die Nähe der beiden Messelektroden gelangt.

Vorgesehen ist es weiterhin, einen Microcomputer oder einen Mikrocontroller in einer entsprechenden Schaltungsanordnung mit einer Signalverarbeitungselektronik einzusetzen, welcher einen geringen Stromverbrauch aufweist. Der Microcomputer oder ein Mikrocontroller wertet beispielsweise die von der Signalverarbeitungselektronik erzeugten Messwerte aus und detektiert derart eine eindringende Feuchtigkeit oder Flüssigkeit. Ein Vorteil des Einsatzes eines Microcomputers oder Mikrocontrollers in einer Anordnung zur Feuchtigkeitsmessung besteht darin, dass eine nur geringe Gleichspannung im Bereich von 1,2 Volt bis 30 Volt (Niederspannung/ Kleinspannung) zum Betrieb der Anordnung benötigt wird. Außerdem hat ein derartiger Microcomputer oder Mikrocontroller einen nur geringen Leistungsbedarf, was insbesondere bei einem Einsatz mit einer Batterie beziehungsweise einem Akkumulator vorteilhaft ist und die mögliche Betriebsdauer der Anordnung zur Feuchtigkeitsmessung verlängert.

Vorgesehen ist es ebenso, dass das beschriebene Verfahren zur Feuchtigkeitsmessung entlang einer Messstrecke ebenso wie für eindringende Flüssigkeiten auch für austretende Flüssigkeiten angewendet wird. So ist es beispielsweise auch vorgesehen, die Dichtheit von Rohren, Tanks oder Becken, welche Flüssigkeiten beinhalten, mithilfe des Systems zu überwachen.

Das von der Signalverarbeitungselektronik beispielsweise beim Erkennen einer eindringenden Flüssigkeit in eine zu überwachende Fuge erzeugte Warnsignal wird beispielsweise an das zuständige Wartungspersonal in Form von Livedaten mittels einer Anwendungssoftware, wie beispielsweise einer APP, als Anzeige in einem Dashboard oder einem erzeugen Bericht beziehungsweise Report ausgegeben.

Vorgesehen ist es, dass die Messelektroden entlang der Messstrecke beispielsweise als Schienen oder Drähte ausgeführt werden und aus einem elektrisch leitfähigen Material bestehen. Die Messelektroden weisen vorzugsweise eine die Messelektrode umgebende Isolation auf.

Alternativ können die schienen- oder drahtförmigen Messelektroden mittels isolierender Mittel zum Fixeren der Messelektroden paarweise und parallel zueinander derart angeordnet werden, dass kein elektrischer Kontakt zwischen den Messelektroden entstehen kann. Hierfür können entsprechende Halter entlang der Messelektroden angeordnet werden, welche die Messelektroden fixieren. Diese Halter werden teilweise oder vollständig aus einem nicht elektrisch leitfähigen Material wie einem Kunststoff hergestellt.

Vorgesehen ist es auch, dass der Abstand zwischen zwei Messelektroden über die gesamte Länge der Erstreckung der Messelektroden entlang der Messstrecke, beispielsweise entlang einer zu überwachenden Fuge in einer Fahrbahn einer Straßenbrücke, konstant bleibt.

Vorgesehen ist es auch, dass die beispielsweise paarweise angeordneten Messelektroden entlang einer Fugenfläche und in einem konstanten Abstand zu dieser Fugenfläche angeordnet sind. Alternativ können die paarweise angeordneten Messelektroden ohne einen Abstand aufzuweisen entlang der Fugenfläche und direkt auf diese angeordnet werden. Außerdem können die Messelektroden derart entlang der Fugenfläche angeordnet werden, dass eine der Messelektroden einen Abstand zur Fugenfläche aufweist, während die andere Messelektrode keinen Abstand zur Fugenfläche aufweist.

Vorgesehen ist es, dass beispielsweise eine zu überwachende Fuge mittels mehrerer paarweise angeordneter Messelektroden, als kapazitive Sensoren, überwacht wird. Hierbei wird ein Teilabschnitt der Fuge durch ein diesem Teilabschnitt der Fuge zugeordnetes Paar von Messelektroden überwacht, wobei die Messstrecke in mehrere Teil-Messtrecken beziehungsweise Kondensatorbereiche mit je einem der Teil-Messstrecke zugeordneten kapazitiven Sensor unterteilt wird. Durch eine Anordnung mehrerer Paare von Messelektroden in mehreren Teilabschnitten beziehungsweise Kondensatorbereichen der Fuge wird die gesamte Länge der Fuge beziehungsweise der Messstrecke überwacht. Diese Ausgestaltung ermöglicht es, dass das beim Eindringen einer Flüssigkeit erzeugte Warnsignal einem konkreten Teilabschnitt beziehungsweise Kondensatorbereich zugeordnet werden kann. Hiermit wird ein Auffinden eines Defekts beispielsweise in einer Gummilippe einer Fuge beschleunigt, da nicht die gesamte Fuge, sondern nur der entsprechende Teilabschnitt untersucht werden muss.

Vorgesehen ist es, dass beispielsweise Feuchtigkeit oder eine eindringende Flüssigkeit an Fugen beziehungsweise Fugenflächen detektiert wird, welche eine gegenüber ihrer Quererstreckung wesentlich größere Längserstreckung aufweisen. Die Längserstreckung derartiger Fugen beträgt meist ein Vielfaches der Quererstreckung der Fuge und entspricht der größten Ausdehnung einer zu überwachenden Fuge eines Bauwerks.

In Richtung dieser größten Ausdehnung der Fuge sind die mindestens zwei länglichen, elektrisch leitenden Messelektroden entlang der Messstrecke parallel zueinander in einem definierten Abstand zueinander angeordnet und bilden derart einen kapazitiven Sensor beziehungsweise eine Kondensatoranordnung beispielsweise innerhalb einer zu überwachenden Fuge aus. Diese Messelektroden weisen Anschlussleitungen auf mittels derer die Messelektroden zumindest mittelbar mit der Signalverarbeitungselektronik verbunden sind.

Vorgesehen ist, dass mittels dieser aus den Messelektroden und der Signalverarbeitungselektronik gebildeten kapazitiven Messeinheit eine Kapazitätsmessung erfolgt. Feuchtigkeit oder eindringende Flüssigkeiten wie Wasser oder eine Salzlauge führen zu einer Veränderung der dielektrischen Eigenschaften der durch die Messelektroden ausgebildeten kapazitiven Sensoren beziehungsweise Kapazitäten. Somit verändert sich durch die Veränderung der Dielektrizitätszahl die ausgebildete Kapazität und somit das von der Signalverarbeitungselektronik erzeugte Messergebnis bei der Kapazitätsmessung. Diese Veränderung des gemessenen Kapazitätswerts lässt einen Rückschluss auf vorhandene Feuchtigkeit beziehungsweise eine eindringende Flüssigkeit in den Bereich der Messelektroden zu. Durch eine Auswertung der Veränderung der gemessenen Kapazitätswerte oder einem Vergleich mit einem Vorgabewert, wird beispielsweise auf eine Undichtigkeit geschlossen, über welche eine Flüssigkeit in den Bereich der durch die Messelektroden ausgebildeten Kapazität eindringen konnte. Ist dies der Fall, erzeugt die erfindungsgemäße Anordnung ein Warnsignal, welches durch die Anordnung zur Feuchtigkeitsmessung ausgegeben wird.

Weiterhin ist es vorgesehen, dass die Messelektroden zur Ausbildung der Kapazität in einem gleichmäßigen Abstand zueinander angeordnet werden, wobei dieser Abstand zwischen 1 mm und 250 mm beträgt.

Vorgesehen ist es auch, dass zur Ausbildung einer Kapazität nur ein erste längliche, elektrisch leitende Messelektrode in Form eines Drahts oder einer Schiene in der Längserstreckung einer Fuge ausgerichtet angeordnet ist und die zweite Messelektrode durch eine Seite der Fuge beziehungsweise eine Fugenfläche einer Fugenseite der Fuge ausgebildet wird, wobei die Fugenfläche und die erste Messelektrode parallel zueinander mit einem gleichbleibenden Abstand zueinander angeordnet sind. Voraussetzung für die Nutzung einer Fugenfläche als Messelektrode ist es, dass die Fugenfläche aus einem elektrisch leitfähigen Material besteht und elektrisch isoliert zu weiteren Elementen beispielsweise eines Bauwerks angeordnet ist. So kann die erste Messelektrode und die Fugenfläche als zweite Messelektrode mittels entsprechender Anschlussleitungen mit der Signalverarbeitungselektronik zur Durchführung entsprechender Kapazitätsmessungen verbunden werden. Auch in diesem Fall wird dafür Sorge getragen, dass die so ausgebildeten Messelektroden keinen elektrisch leitfähigen Kontakt zueinander aufweisen.

Grundsätzlich können die Fugenflächen beliebige Flächenformen besitzen. Bevorzugt sollte jedoch die deutlich längere Ausdehnung der Fuge in horizontale Richtung bestehen, damit die Flüssigkeit in die Nähe der Messanordnung mit ihren Messelektroden gelangt oder durch sie hindurchfließt. Vertikale Anwendungen sind zwar möglich, erlauben aber nur eine eingeschränkte Abschätzung des Vorhandenseins einer Feuchtigkeit oder einer eindringenden Flüssigkeit.

Die Messelektroden bestehen aus elektrischen Leitern, die als unterschiedliche Querschnitte ausgeführt werden können. Vorgesehen ist es, mindestens eine der paarweisen Messelektroden mit einem isolierenden Material zu umgeben, damit Flüssigkeiten keine leitende Verbindung zwischen den Messelektroden aufbauen können. Die zweite Messelektrode kann ohne Isolation ausgeführt werden, somit kann diese Messelektrode auch durch eine elektrisch leitende Oberfläche einer Fugenfläche ausgebildet werden.

Vorgesehen ist es, dass der Abstand der Messelektroden voneinander aufgrund einer verwendeten messbereichserweiterten Messeinheit in der Anordnung zur Feuchtigkeitsmessung in einem gewissem Bereich variabel einstellbar ist. Eine derartige messbereichserweiterte Messeinheit kann mittels eines Messverstärkers eine Anpassung des kapazitiven Sensors beziehungsweise des ausgebildeten Kondensators an örtliche Gegebenheiten ermöglichen. So besteht die Möglichkeit des Einsatzes der Anordnung zur Feuchtigkeitsmessung beispielsweise in Fugen mit verschiedenen Längen und Breiten.

Die Messelektroden der Anordnung zur Feuchtigkeitsmessung können entweder auf einer Fugenfläche beziehungsweise auf einer einzelnen Fugenseite oder gegenüberliegend auf beiden Fugenflächen angebracht sein. In beiden Fällen kann eine der Messelektroden durch eine Fugenfläche ausgebildet werden, wie weiter oben bereits beschrieben wurde.

Vorzugsweise werden die beiden paarweisen Messelektroden in einer Fuge senkrecht übereinander angeordnet. In dieser Ausrichtung kann eine eindringende Flüssigkeit die Dielektrizitätszahl des ausgebildeten Kondensators am signifikantesten beeinflussen. Der Abstand der Messelektroden zueinander beträgt auch in dieser Ausrichtung etwa 1 mm bis zu etwa 250 mm.

Die Anbringung der Messelektroden ist bedingt durch die Art und Form der jeweiligen Fuge sowie die Gestalt der Messelektroden selbst. Unterschiedliche Fugenmaterialien wie beispielsweise Beton, Metall oder Kunststoff erfordern unterschiedliche Befestigungsmethoden wie beispielsweise ein Verschrauben, Klemmen mit Kraftschluss, Umschließen mit einer nichtmetallischen Hüllstruktur und andere mehr. Messelektroden und Fuge müssen nicht als gesonderte Einheiten gesehen werden. Vielmehr können die Messelektroden auch durch chemische oder physikalische Auftragsverfahren direkt während des Regelherstellungsprozesses der Fuge an diese beziehungsweise innerhalb dieser angebracht werden. In jedem Fall wird die Signalverarbeitungselektronik anschließend mit den Enden der Messelektroden verbunden und derart die Anordnung zur Feuchtigkeitsmessung komplettiert.

Zwischen den Messelektroden und der Signalverarbeitungselektronik ist eine Anschlussleitung vorgesehen, welche eine Schirmung besitzt, sodass zusätzliche Kabellängen keinen Einfluss auf die Messungen mit den Messelektroden ausüben.

Durch die Länge der Messelektroden bedingt können sich beispielsweise elektrische Störungen/Frequenzen wie Funksignale oder Blitze in die Messelektroden einkoppeln. Vorgesehen ist daher eine elektrische Trennung der Messelektroden vom Messsystem mittels einer Trennanordnung vorzusehen, solange keine Messung durchgeführt wird, um eine Beschädigung empfindlicher Elektronik vorzubeugen.

Außerdem ist eine galvanische Trennung der zur Kapazitätsmessung genutzten Signalverarbeitungselektronik gegenüber anderen Baugruppen beziehungsweise Bestandteilen der Anordnung zur Feuchtigkeitsmessung vorgesehen, um im Netzbetrieb Störungen von Netzteilen herauszuhalten, die die Messung stark verfälschen. Dies gilt insbesondere in Fällen, in denen die Anordnung mit einem Netzteil wie einem Schalt- oder Linearnetzteil zur Spannungsversorgung betrieben wird. Im Betrieb mit einer Batterie oder einem Akkumulator kann diese Maßnahme entfallen.

Zur Ermittlung eines Messwertes durch die Anordnung zur Feuchtigkeitsmessung wird an einer Messelektrode ein Erregersignal angelegt, welches eine elektrische Spannung in der zweiten oder weiteren Messelektrode induziert. Diese induzierte Spannung wird mittels der Signalverarbeitungselektronik ausgewertet. Eine Weiterverarbeitung der von der Signalverarbeitungselektronik aufgenommenen Messwerte mittels einer Verarbeitungseinheit wie einem Mikrocontroller mit einer entsprechenden Recheneinheit ist ebenso vorgesehen. Hierbei kann der aktuelle Messwert der ausgebildeten Kapazität mit bereits abgespeicherten Messwerten aus der Vergangenheit oder mit einem Vorgabewert für die Kapazität verglichen werden. Derart können Abweichungen erkannt und ein Warnsignal erzeugt und ausgegeben werden, für den Fall, dass eine Differenz zweier Messwerte eine bestimmte Schwelle überschreitet. Eine derartige Differenz bezieht sich beispielsweise auf zwei Systeme mit ihren Messelektroden, die auf verschiedenen Fugenflächen angebracht sind. Detektiert nur das eine System mit seinen Messelektroden Feuchtigkeit, erkennt man in der auftretenden Differenz den nur einseitigen Feuchtigkeitseinbruch an einer Fugenfläche.

Alternativ kann ein Warnsignal erzeugt und ausgegeben werden, für den Fall, dass ein aktueller Messwert gleich oder größer als ein Vorgabewert beziehungsweise Vergleichswert ist. Diese Schwelle ist ein vorgegebener Feuchtigkeitsgrenzwert, bei dessen Überschreitung das Warnsignal erzeugt und ausgegeben wird.

Vorgesehen ist es, dass eine Ermittlung von Messwerten in regelmäßigen Abständen erfolgt. Alternativ können Messwerte auch gesteuert mittels eines entsprechenden Programmablaufs oder mittels einer an die Anordnung zur Feuchtigkeitsmessung übertragenen Aufforderung erzeugt werden.

Vorgesehen ist es weiterhin, dass jeweils zwei paarweise Messelektroden in einer Fuge angeordnet werden. Hierbei wird das erste Paar der Messelektroden für die Detektion einer eindringenden Feuchtigkeit oder Flüssigkeit in den oben beschriebenen Varianten angeordnet. Das zweite Paar der Messelektroden wird nur zur Bestimmung der aktuellen Feuchtigkeit in der Fuge benötigt und kann auch in einem Bereich der Fuge angebracht werden, welche von einer eindringen Flüssigkeit nicht erreicht wird. Alternativ kann das zweite Paar der Messelektroden derart ausgeführt werden, dass es nicht den gesamten Bereich der Fuge abdeckt. Die mittels beider paarweisen Messelektroden bestimmten Messwert können beispielsweise mittels der Signalverarbeitungselektronik und/oder einer Verarbeitungseinheit wie einem Mikrocontroller voneinander abgezogen werden, um derart den Anteil einer Umgebungsfeuchtigkeit in der Fuge zu kompensieren. Derart wird nur der durch eine eindringende Flüssigkeit verursachte Anteil einer Kapazitätsänderung im ersten Paar der Messelektroden zur Detektion eindringender Feuchtigkeit genutzt und ausgewertet.

Vorgesehen ist es, dass die Anordnung zur Feuchtigkeitsmessung eine Schnittstelle wie ein Sendemodul oder ein Hochfrequenz-Modul aufweist, mittels welcher die erzeugten Messwerte der Anordnung oder das erzeugte Warnsignal an eine zentrale Verarbeitungseinheit wie einen Server übertragen werden.

Vorgesehen ist es weiterhin, dass der Abstand der paarweisen Messelektroden zueinander derart an die Länge der Fuge also die Messstrecke und die Dimensionierung der Messelektroden, wie beispielsweise ihren Durchmesser angepasst ist, dass ein Wert für eine maximale Kapazität, die durch die Messelektronik der Signalverarbeitungselektronik messbar ist, nicht überschritten wird. Andererseits wird der durch die paarweisen Messelektroden gebildete kapazitive Sensor so empfindlich ausgelegt, dass Feuchtigkeit oder eine eindringende, zu messende Flüssigkeit wie Wasser oder eine Salzlauge sicher detektiert werden.

Der Betrieb der Anordnung zur Feuchtigkeitsmessung erfolgt mit einer Spannung im Bereich von 1,2 Volt bis etwa 30 Volt. Die Länge der Messelektroden beträgt zwischen 10 cm und 100 m. Die Querschnitte der Messelektroden sind angepasst an die maximal messbare Kapazität und variieren beispielsweise bei runden Querschnitten zwischen 0,25 mm² und 10 mm².

Vorgesehen ist es auch, dass die Messelektroden der Anordnung zur Feuchtigkeitsmessung bereits während des Herstellungs- und Einbauprozesses von Bauwerken oder Fugen zumindest teilweise eingebettet werden. Dies ist insbesondere dann vorgesehen, wenn die Zugänglichkeit zur Fuge nach dem Bauprozess nicht mehr gewährleistet ist oder wenn das Fugenmaß keinen nachträglichen Eingriff beziehungsweise Einbau mehr erlaubt.

Weiterhin besteht die Möglichkeit, Messelektroden bereits in das Gesamtbauwerk einzubetten. In diesem Fall muss zur Inbetriebnahme der Anordnung zur Feuchtigkeitsmessung ein Anschluss der Messelektroden über die hierfür vorgesehenen Anschlussleitungen wie beispielsweise eine geschirmte Leitung an die Signalverarbeitungselektronik der Anordnung erfolgen. In diesem Fall wird die Signalverarbeitungselektronik der Anordnung außerhalb des Bauwerks angeordnet.

Die Flexibilität des Systems erlaubt eine Anpassung an unterschiedliche Fugengeometrien, eine Beschränkung auf eine nur geradlinig verlaufende Fuge ist nicht vorgesehen.

An zugänglichen Fugen, beispielsweise in Großbauwerken, kann das System beziehungsweise die Anordnung zur Feuchtigkeitsmessung mit ihren Messelektroden nachträglich installiert werden. Eine solche Nachrüstung erlaubt es, bestehende Bauwerke oder Bauwerksteile mit der Anordnung zur Feuchtigkeitsmessung zu versehen und derart eine sichere Überwachung beispielsweise der Dichtigkeit von Fugen zu gewährleisten.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigen:
- Fig. 1:: eine schematische Anordnung von paarweise angeordneten Messelektroden entlang einer Messstrecke beziehungsweise Fuge,

- Fig. 2:: eine schematische Anordnung von Messelektroden entlang einer Messstrecke beziehungsweise Fuge,

- Fig. 3a bis 3c:: eine schematische Anordnung von mehreren paarweise angeordneten Messelektroden entlang einer Messstrecke beziehungsweise Fugenhälfte in einer dritten und in einer vierten Ausgestaltung und
- Fig. :4: eine schematische Ansicht von Baugruppen einer erfindungsgemäßen Anordnung zur Feuchtigkeitsmessung.

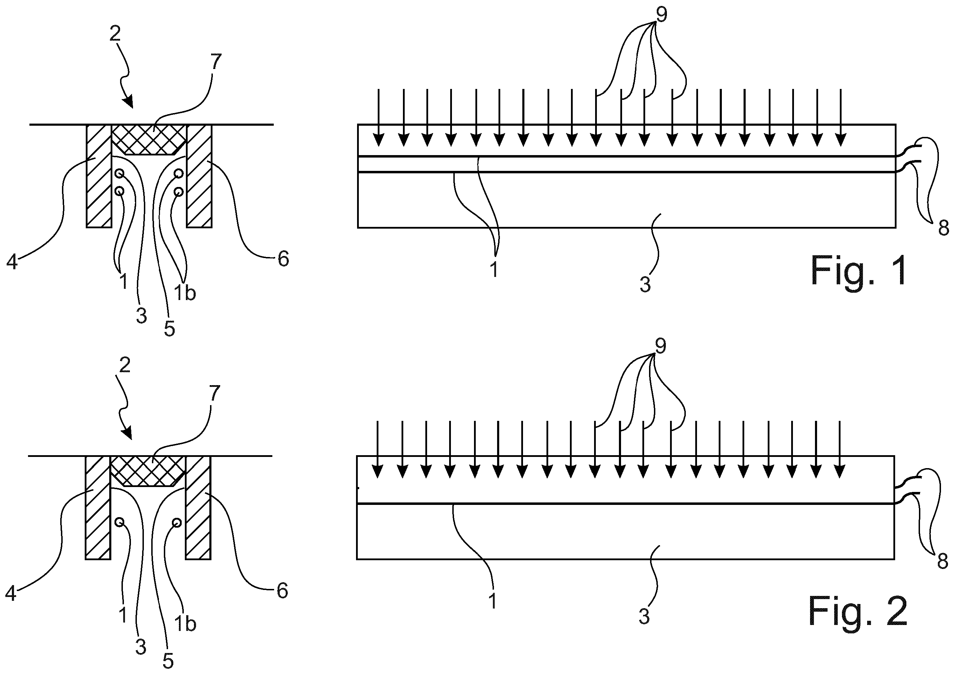

- Die **Figur 1**: zeigt eine schematische Anordnung von paarweise angeordneten

Messelektroden 1 entlang einer Messstrecke beziehungsweise Fuge 2.

Im linken Teil der Figur 1 ist eine aus einer ersten Fugenfläche 3 einer ersten Fugenseite 4 der Fuge 2 und einer zweiten Fugenfläche 5 einer zweiten Fugenseite 6 aufgebaute Fuge 2 in einer Schnittdarstellung abgebildet. Die erste Fugenseite 4 sowie die zweite Fugenseite 6 sind nur angedeutet und können die Fugenseiten eines Bauwerks wie einem Gebäude oder einer Brücke darstellen.

Zwischen den Fugenflächen 3 und 5 ist eine Dichtung 7 angeordnet, welche die Fuge 2 gegen eindringende Feuchtigkeit, Flüssigkeiten und Schmutz schützt. Die Dichtung 7 besteht beispielsweise aus einem Kunststoff und lässt sich zumindest teilweise verformen, ohne ihre dichtende Wirkung zu verlieren.

Die kapazitiven Sensoren der Anordnung zur Feuchtigkeitsmessung sind zwei parallel zueinander angeordnete erste Messelektroden 1. Diese ersten Messelektroden 1 sind im Beispiel der Figur 1 beispielsweise entlang der ersten Fugenfläche 3 und in einem konstanten Abstand zu dieser ersten Fugenfläche 3 angeordnet. Alternativ können die ersten Messelektroden 1 ohne einen Abstand aufzuweisen entlang der ersten Fugenfläche 3 und direkt auf diese angeordnet werden. Außerdem können die ersten Messelektroden 1 derart entlang der ersten Fugenfläche 3 angeordnet werden, dass eine der ersten Messelektroden 1 einen Abstand zur ersten Fugenfläche 3 aufweist, während die andere der ersten Messelektroden 1 keinen Abstand zur ersten Fugenfläche 3 aufweist. Die paarweise angeordneten ersten Messelektroden 1 erstrecken sich beispielsweise über die gesamte Längserstreckung der Fuge 2 und somit über die gesamte Messstrecke. Derart wird es ermöglicht, die gesamte Fuge 2 auf eindringende Feuchtigkeit oder Flüssigkeiten zu überwachen.

Alternativ kann es vorgesehen sein, ein zweites Paar Messelektroden 1b entlang der zweiten Fugenfläche 5 und in einem konstanten Abstand zueinander und zu dieser anzuordnen. Durch eine Anordnung erster und zweiter paarweiser Messelektroden 1 und 1b werden beide für das Eindringen beispielsweise einer Flüssigkeit wie einer Lauge kritischen Übergangsstellen zwischen der Dichtung 7 und der ersten Fugenfläche 3 sowie zwischen der Dichtung 7 und der zweiten Fugenfläche 5 überwacht. Somit wird die verfahrensgemäße Feuchtigkeitsdetektion verbessert.

Im rechten Teil der Figur 1 ist eine beispielhafte erste Fugenfläche 3 in ihrer Längserstreckung dargestellt. Zu erkennen sind weiterhin das erste Paar Messelektroden 1, welche parallel zueinander entlang der Oberfläche der ersten Fugenfläche 3 über die gesamte Messstrecke angeordnet sind. Zur Verbindung mit einer nicht dargestellten Signalverarbeitungselektronik 14 weißen die Messelektroden 1 je eine Anschlussleitung 8 auf.

Die Richtung beziehungsweise Fließrichtung 9 einer in die Fuge 2 eindringenden Flüssigkeit, ist im rechten Teil der Figur 1 mittels mehrerer senkrechter Pfeile dargestellt.

Das dargestellte erste Paar Messelektroden 1 ist somit parallel zueinander entlang der Oberfläche der ersten Fugenfläche 3 und in der Fließrichtung 9 ausgerichtet angeordnet. Derart kann eine eindringende Flüssigkeit die Messelektroden 1 in der Fließrichtung 9 durchströmen und somit die dielektrischen Eigenschaften des durch die Messelektroden 1 ausgebildeten kapazitiven Sensors beziehungsweise dieser ersten Kapazität bestmöglich beeinflussen. Derart wird die Empfindlichkeit der Anordnung zur Feuchtigkeitsmessung verbessert.

Zur Vermeidung elektrischer Kurzschlüsse der Messelektroden 1 miteinander beziehungsweise mit einer Fugenfläche 3 oder 5 wird mindestens eine Messelektrode 1 mit einem isolierenden Material wie einem Kunststoff umhüllt. Die **Figur 2** zeigt eine schematische Anordnung von Messelektroden 1 entlang einer Messstrecke beziehungsweise Fuge 2 in einer Ausgestaltung der Erfindung.

Im linken Teil der Figur 2 ist eine aus einer ersten Fugenfläche 3 einer ersten Fugenseite 4 der Fuge 2 und einer zweiten Fugenfläche 5 einer zweiten Fugenseite 6 aufgebaute Fuge 2 in einer Schnittdarstellung abgebildet, wie sie bereits aus der Figur 1 bekannt ist. Die erste Fugenseite 4 sowie die zweite Fugenseite 6 sind nur angedeutet und können die Fugenseiten eines Bauwerks wie einem Gebäude oder einer Brücke darstellen.

Zwischen den Fugenflächen 3 und 5 ist eine Dichtung 7 angeordnet, welche die Fuge 2 gegen eindringende Feuchtigkeit, Flüssigkeiten und Schmutz schützt. Die Dichtung 7 besteht auch in diesem Ausführungsbeispiel beispielsweise aus einem Kunststoff und lässt sich zumindest teilweise verformen, ohne ihre dichtende Wirkung zu verlieren.

Die Sensoren der Anordnung zur Feuchtigkeitsmessung sind zwei parallel zueinander angeordnete Messelektroden 1. Die erste Messelektrode 1 ist beispielsweise ein Draht oder eine Metallschiene, welche entlang der ersten Fugenfläche 3 und in einem konstanten Abstand zu dieser angeordnet ist, beziehungsweise verläuft. Die zweite Messelektrode zur Ausbildung eines kapazitiven Sensors für die Anordnung zur Feuchtigkeitsmessung wird durch die elektrisch leitfähige erste Fugenfläche 3 selbst ausgebildet.

Vorgesehen ist es, dass die elektrisch leitfähige erste Fugenfläche 3 beispielsweise in Form eines Streifens, über die gesamte Länge der Fuge 2 und elektrisch isoliert ausgebildet ist. Derart muss nur eine beispielsweise drahtförmige Messelektrode 1 beabstandet zur ersten Fugenfläche 3 und ohne eine elektrisch leitende Verbindung zu dieser ersten Fugenfläche 3 angeordnet werden, um einen ersten kapazitiven Sensor für die Anordnung zur Feuchtigkeitsmessung zur Verfügung zu stellen.

Da sich die derart ausgebildeten Messelektroden 1 über die gesamte Länge der Fuge 2 beziehungsweise der Messstrecke erstrecken, ist es möglich, die gesamte Fuge 2 auf eindringende Feuchtigkeit oder Flüssigkeiten zu überwachen.

Alternativ kann eine weitere Messelektrode vorgesehen werden, welche entlang der zweiten Fugenfläche 5 und in einem konstanten Abstand zu dieser angeordnet ist. Somit wird ein zweiter kapazitiver Sensor durch die beispielsweise drahtförmige Messelektrode 1b und die zweite Fugenfläche 5 ausgebildet.

Durch eine Anordnung eines ersten und eines zweiten kapazitiven Sensors für die Anordnung zur Feuchtigkeitsmessung werden beide für das Eindringen beispielsweise einer Flüssigkeit wie einer Lauge kritischen Übergangsstellen zwischen der Dichtung 7 und der ersten Fugenfläche 3 sowie zwischen der Dichtung 7 und der zweiten Fugenfläche 5 überwacht

Im rechten Teil der Figur 2 ist beispielhafte eine als Messelektrode genutzte erste Fugenfläche 3 in ihre Längserstreckung dargestellt. Zu erkennen ist weiterhin die drahtförmige Messelektroden 1, welche entlang der Oberfläche der ersten Fugenfläche 3 in einem gleichmäßigen Abstand zu dieser angeordnet ist. Zur Verbindung mit einer nicht dargestellten Signalverarbeitungselektronik weisen die Messelektroden 1 je eine Anschlussleitung 8 auf.

Die Richtung beziehungsweise Fließrichtung 9 einer in die Fuge 2 eindringenden Flüssigkeit, ist im rechten Teil der Figur 2 mittels mehrerer senkrechter Pfeile dargestellt.

Zur Vermeidung elektrischer Kurzschlüsse der Messelektroden 1 mit der ersten Fugenfläche 3 wird die drahtförmige Messelektrode 1 mit einem isolierenden Material wie einem Kunststoff umhüllt.

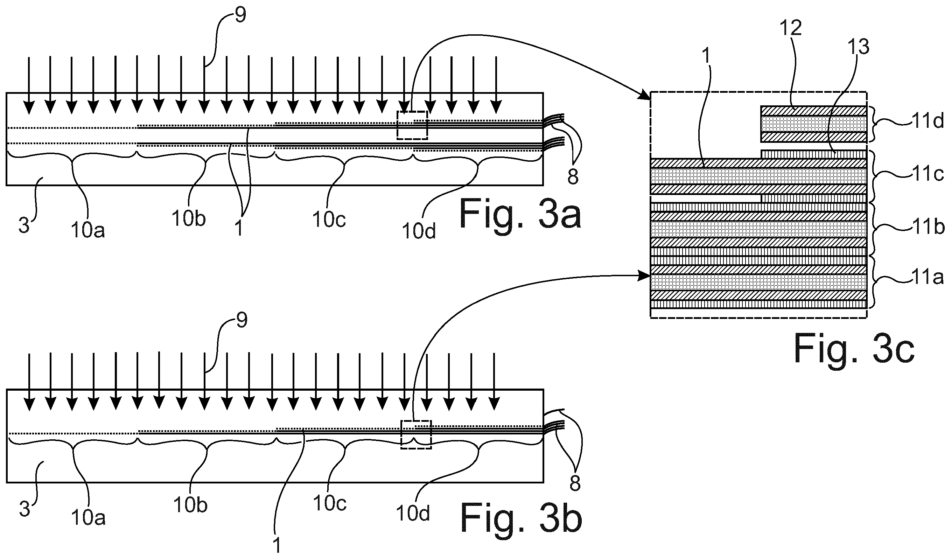

Die **Figuren 3a bis 3c** zeigen eine schematische Anordnung von mehreren paarweise angeordneten Messelektroden 1 entlang einer Fugenfläche 3 in einer dritten und in einer vierten Ausgestaltung. Auch in diesem Fall erstreckt sich die Messstrecke entlang der Fuge 2 beziehungsweise der Fugenfläche 3.

Die Figuren 3a und 3b zeigen die bereits aus dem rechten Teil der Figur 1 und 2 bekannte beispielhafte erste Fugenfläche 3, welche auch die zweite Fugenhälfte 5 sein könnte, in ihre Längserstreckung. Die Figur 3c ist eine vergrößerte Darstellung des mit einem Kreis gezeigten Bereichs der mehreren Messelektroden 1 in den Figuren 3a und 3b.

Zu erkennen sind mehrerer paarweise angeordnete Messelektroden 1 in zwei übereinanderliegenden Gruppen, wobei jede Messelektrode 1 jeweils von einer Isolation 12 umgeben ist. In der Längserstreckung der ersten Fugenfläche 3 sind mehrere Messelektroden 1 in einer Gruppe angeordnet, welche unterschiedliche Längen aufweisen. Die Messelektroden 1, welche die gleiche Länge aufweisen, bilden je ein Paar von Messelektroden 1, welche zu einem kapazitiven Sensor beziehungsweise einer Kapazität 11a bis 11d für die Anordnung zur Feuchtigkeitsmessung zugehörig sind.

So wird beispielsweise in einem ersten Kondensatorbereich 10a durch die längste Messelektrode 1 der oberen Gruppe und die längste Messelektrode 1 der unteren Gruppe ein erster kapazitiver Sensor beziehungsweise eine erste Kapazität 11a ausgebildet. Weiterhin wird in einem zweiten Kondensatorbereich 10b eine zweite Kapazität 11b durch die zweitlängste Messelektrode 1 der oberen Gruppe und die zweitlängste Messelektrode 1 der unteren Gruppe ausgebildet und so weiter. Schließlich wird in einem vierten Kondensatorbereich 10d eine vierte Kapazität 11d durch die kürzeste Messelektrode 1 der oberen Gruppe und die kürzeste Messelektrode 1 der unteren Gruppe ausgebildet.

Zur Ausbildung der Kondensatorbereiche 10a, 10b, 10c und 10d weisen die die erste Kapazität 10a, die zweite Kapazität 11b und die dritte Kapazität 11c bildenden Messelektroden 1 eine Schirmung auf, welche eine gegenseitige Beeinflussung der Messelektroden 1 verhindert und die Ausbildung der Kondensatorbereiche 10a, 10b und 10c ermöglicht.

Diese Anordnung der Messelektroden 1 mit ihrer jeweiligen Isolationen 12 und ihren teilweisen Schirmungen 13 ist in der Figur 3c für alle Gruppen von Messleitungen 1 in einer vergrößerten Ansicht gezeigt. Die in der oberen und unteren Gruppe zur vierten Kapazität 11d zugehörige Messelektrode 1 in der Figur 3a, welche den Kondensatorbereich 10d bildet, weist nur eine Isolation 12 auf. Die in der oberen und unteren Gruppe zum nachfolgenden Kondensatorbereich 10c zugehörige Messelektroden 1 weisen je eine Isolation 12 und je eine Schirmung 13 auf, wobei sich die Schirmung 13 über den gesamten vierten Kondensatorbereich 10d erstreckt. Somit wird die vierten Kapazität 11d nicht durch Spannungen oder Signale auf den Messleitungen 1 beeinflusst, welche die dritte Kapazität 11c ausbilden.

Weiterhin weisen die in der oberen und unteren Gruppe zum nachfolgenden Kondensatorbereich 10b zugehörige Messelektroden 1 je eine Isolation 12 und je eine Schirmung 13 auf, wobei sich die Schirmung 13 über den vierten Kondensatorbereich 10d und den dritten Kondensatorbereich 10c erstreckt. Somit wird die dritte Kapazität 11c und die vierten Kapazität 11d nicht durch Spannungen oder Signale auf den Messleitungen 1 beeinflusst, welche die zweite Kapazität 11b ausbilden.

Weiterhin weisen die in der oberen und unteren Gruppe zum nachfolgenden Kondensatorbereich 10a zugehörige Messelektroden 1 je eine Isolation 12 und je eine Schirmung 13 auf, wobei sich die Schirmung 13 über den vierten Kondensatorbereich 10d, den dritten Kondensatorbereich 10c und den zweiten Kondensatorbereich 10b erstreckt. Somit wird die zweite Kapazität 11b, die dritte Kapazität 11c und die vierten Kapazität 11d nicht durch Spannungen oder Signale auf den Messleitungen 1 beeinflusst, welche die erste Kapazität 11a ausbilden.

In der Figur 3a sind zwei übereinanderliegende Gruppen, mit ihren paarweisen und unterschiedlich langen Messelektroden 1 dargestellt. Die Ausbildung von Kapazitäten 11a bis 11d entspricht der Ausbildung einer Kapazität gemäß Figur 1.

In der Figur 3b ist nur eine Gruppe von unterschiedlich langen Messelektroden 1 dargestellt. In dieser Ausführung wird die jeweils zweite zur Ausbildung der Kapazitäten 11a bis 11d notwendige Messelektrode 1 durch einen Bereich der beispielhaft dargestellten ersten Fugenfläche 3 ausgebildet. Das Prinzip entspricht somit einer Vervielfachung des zur Figur 2 erläuterten Prinzips zur Ausbildung von kapazitiven Sensoren beziehungsweise Kapazitäten für die Anordnung zur Feuchtigkeitsmessung.

Die Anordnung und Ausstattung der unterschiedlich langen Messelektroden 1 mit einer Isolation 12 beziehungsweise einer Schirmung 13 in der Figur 3b entspricht der in der Figur 3c vergrößerten und bereits weiter oben beschriebenen Ausführung.

Die Figuren 3a und 3b zeigen auch die Fließrichtung 9 einer eventuell in die Fuge 2 eindringenden Flüssigkeit und die Anschlussleitungen 8 mittels welcher die Messelektroden 1 mit einer in den Figuren 3a bis 3c nicht dargestellten Signalverarbeitungselektronik 14 der Anordnung zur Feuchtigkeitsmessung verbunden werden. Die Signalverarbeitungselektronik 14 kann mehrere Eingänge zum Verbinden der ausgebildeten Kapazitäten 11a bis 11d mit der Signalverarbeitungselektronik 14 aufweisen. Alternativ können die ausgebildeten Kapazitäten 11a bis 11d über einen entsprechenden Auswahlschalter mit der Signalverarbeitungselektronik 14 verbunden werden.

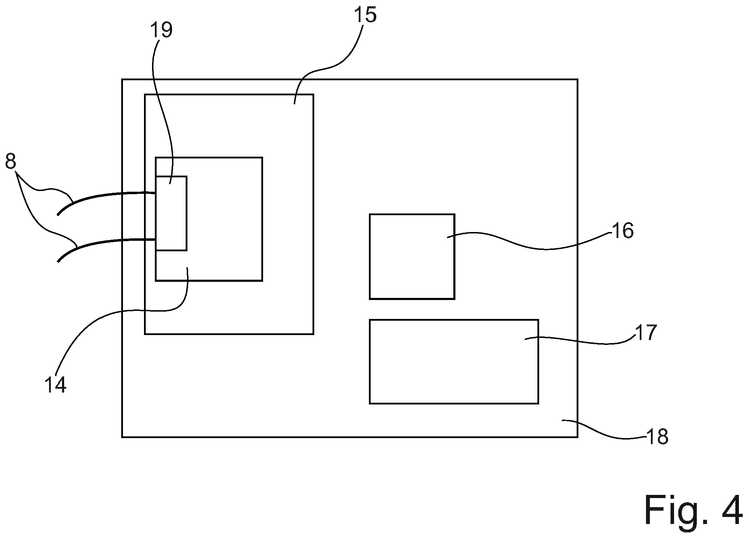

Die **Figur 4** zeigt eine schematische Ansicht von Baugruppen einer erfindungsgemäßen Anordnung zur Feuchtigkeitsmessung.

Dargestellt ist die Signalverarbeitungselektronik 14, welche beispielhaft zwei Eingänge aufweist, über welche die kapazitiven Sensoren beziehungsweise Kapazitäten 11a bis 11d der Anordnung zur Feuchtigkeitsmessung mittels der Anschlussleitungen 8 mit der Signalverarbeitungselektronik 14 verbunden werden. In Ausführungen, in welchen mehrere Kapazitäten 11a bis 11d zum Einsatz kommen, kann die Signalverarbeitungselektronik 14 auch mehr als zwei Eingänge, beispielsweise acht Eingänge aufweisen, welche paarweise über Anschlussleitungen 8 mit beispielsweise vier Kapazitäten 11a bis 11d verbunden werden. Derart können die vier kapazitiven Sensoren beziehungsweise Kapazitäten 11a bis 11d durch die Signalverarbeitungselektronik 14 separat zur Messung eines jeweiligen Kapazitätswerts angesteuert werden.

Alternativ kann zwischen den beiden Eingängen der Signalverarbeitungselektronik 14 und den beispielsweise vier Kapazitäten 11a bis 11d ein entsprechender Umschalter angeordnet werden, welcher jeweils eine Verbindung einer der Kapazitäten 11a bis 11d mit dem Eingang der Signalverarbeitungselektronik 14 herstellt. Ein derartiger Umschalter ist in der Figur 4 nicht dargestellt.

Die Signalverarbeitungselektronik 14 umfasst elektronische Schaltungsteile, welche zur Messung eines Kapazitätswerts beispielsweise der Kapazitäten 11a bis 11d notwendig sind. Die Signalverarbeitungselektronik 14 realisiert somit sowohl die verfahrensgemäße Bereitstellung einer Spannung beziehungsweise eines Erregersignals, welches an eine entsprechende ersten Messelektrode 1 einer beispielhaften Kapazität 11a angelegt wird, als auch ein Erfassen beziehungsweise Auswerten der in der zugehörigen zweiten Messelektrode 1 der Kapazität 11a induzierten Spannung mittels einer geeigneten Messeinheit. Hierfür verfügt die Signalverarbeitungselektronik 14 beispielsweise über eine entsprechende Spannungserzeugungseinheit und mindestens eine Messeinheit, welche beispielsweise einen Sigma-Delta-ADC beinhalten kann.

Der Ablauf der Erzeugung eines Erregersignals, eine Messung eines Kapazitätswertes, eine Auswertung beziehungsweise ein Vergleich eines gemessenen Kapazitätswertes mit einem Vorgabewert und andere Vorgänge, werden mittels einer zentralen Ablaufsteuerung organisiert, welche in der Figur 4 nicht dargestellt ist und eine Steuerung der Anordnung zur Feuchtigkeitsmessung mit ihren zugehörigen Verfahrensablauf ermöglicht.

Zur Auswertung der von der Signalverarbeitungselektronik 14 erzeugten Messwerte bei der Kapazitätsmessung ist eine Verarbeitungseinheit 16 in der Anordnung zur Kapazitätsmessung vorgesehen, welche beispielsweise eine Mikrocontroller beziehungsweise eine zentrale Prozessoreinheit CPU (Central Processing Unit) sein kann. Eine derartige Verarbeitungseinheit 16 kann auch die Funktion einer zentralen Steuereinheit übernehmen.

Die Verarbeitungseinheit 16 ermöglich es, dass die von der Signalverarbeitungselektronik 14 erzeugten Messwerte bei der Kapazitätsmessung miteinander oder mit einem vorgegebenen abgespeicherten Vergleichswert verglichen werden. Beispielsweise bei einem Vergleich mehrerer aufeinander folgender Messwerte miteinander kann eine Zunahme oder eine Abnahme der Feuchtigkeit beispielsweise in einer Fuge 2 festgestellt werden.

Vorgesehen ist es, die Messwerte zu speichern und beispielsweise über eine Schnittstelle 17 auszugeben.

Die Verarbeitungseinheit 16 ermöglich es auch, dass die von der Signalverarbeitungselektronik 14 erzeugten Messwerte bei den Kapazitätsmessungen mit einem vorgegebenen abgespeicherten Vergleichswert verglichen werden und dass beim Erreichen oder Überschreiten des Vergleichswerts ein Warnsignal erzeugt wird. Dieses Warnsignal kann ebenfalls über die Schnittstelle 17 ausgegeben werden.

Die Schnittstelle 17 kann eine drahtgebundene Übertragung der Messwerte und/oder des Warnsignals ermöglichen. Alternativ kann die Schnittstelle 17 eine drahtlose Übertragung der Messwerte und/oder des Warnsignals ermöglichen. Zu diesem Zweck kann die Schnittstelle 17 beispielsweise als ein HF-Modul 17 ausgebildet sein, welches eine drahtlose Datenübertragung mittels eines bekannten Standards wie beispielsweise Bluetooth, NFC (Near Field Communication) oder WLAN (Wireless Local Area Network) ermöglicht. Außerdem kann eine Datenübertragung durch eine entsprechend ausgestattete Schnittstelle 17 über ein Mobilfunknetz erfolgen. Weiterhin ist eine Übertragung der Messwerte mittels LPWAN-Technologie vorgesehen.

Die Signalverarbeitungselektronik 14 zur Messung der Kapazitäten 11 über die zugehörigen Messelektroden 1 weist eine galvanische Trennung 15 auf und wird somit von andere angeschlossen Baugruppen beziehungsweise elektrischen Schaltungen der Anordnung zur Feuchtigkeitsmessung, wie der Verarbeitungseinheit 16 und der Schnittstelle 17, galvanisch getrennt ausgeführt. Diese galvanische Trennung 15 ist insbesondere für Ausführungen der Anordnung zur Feuchtigkeitsmessung vorgesehen, welche ihre Betriebsspannung über ein zugehöriges Netzteil wie beispielsweise ein Schalt- oder Linearnetzteil beziehen.

Eine elektrische Trennung der Messelektroden 1 mit ihren Anschlussleitungen 8 von der Signalverarbeitungseinheit 14 wird mittels einer Trennanordnung 19 vorgenommen. Diese Trennung ist für den Fall vorgesehen, dass keine Messung der Kapazität durchgeführt wird. Derart wird eine Beschädigung empfindlicher Elektronik durch eingekoppelte elektrische Störungen verhindert.

Die beschriebenen Baugruppen der erfindungsgemäßen Anordnung zur Feuchtigkeitsmessung können auf einer Leiterplatte 18 angeordnet werden.

### LISTE DER BEZUGSZEICHEN

- 1, 1b: Messelektrode
- 2: Fuge
- 3: erste Fugenfläche
- 4: erste Fugenseite
- 5: zweite Fugenfläche
- 6: zweite Fugenseite
- 7: Dichtung
- 8: Anschlussleitung
- 9: Fließrichtung
- 10, 10a, 10b, 10c, 10d: Kondensatorbereich
- 11, 11a, 11b, 11c, 11d: Kapazität
- 12: Isolation
- 13: Schirmung
- 14: Signalverarbeitungselektronik / Kapazitätsmesseinheit
- 15: galvanische Trennung
- 16: Verarbeitungseinheit / CPU
- 17: Schnittstelle / HF-Modul
- 18: Leiterplatte
- 19: Trennanordnung

## Patentansprüche

1. Anordnung zur Feuchtigkeitsmessung in Bauwerken, welche einen Sensor und ein Mittel zur Signalverarbeitung ausweist, wobei der Sensor ein kapazitiver Sensor ist, welcher mittels zweier parallel zueinander angeordneter längserstreckter Messelektroden (1) gebildet wird und welcher entlang einer bis zu 100 m langen Messstrecke, welche eine Fuge (2) des Bauwerks ist, angeordnet ist, das Mittel zur Signalverarbeitung eine mit den Messelektroden (1) verbundene Signalverarbeitungselektronik (14), eine Verarbeitungseinheit (16) und eine Schnittstelle (17) umfasst, **gekennzeichnet dadurch, dass** eine Messelektrode (1) eine elektrisch leitende Oberfläche einer Fugenfläche (3, 5) der Fuge (2) ist.

2. Anordnung nach Anspruch 1, **dadurch gekennzeichnet, dass** mehrere kapazitive Sensoren, welche jeweils mittels zweier parallel zueinander angeordneter Messelektroden (1) gebildet werden, entlang der Messstrecke in zugehörigen Kondensatorbereichen (10a, 10b, 10c, 10d) nacheinander angeordnet sind.

3. Anordnung nach Anspruch 1 oder 2, **dadurch gekennzeichnet, dass** die Schnittstelle (17) eine nach einem Mobilfunk-Standard, einem WLAN-Standard, einem Bluetooth-Standard, einem LPWAN-Standard oder einem NFC-Standard arbeitende Schnittstelle ist.

4. Anordnung nach einem der Ansprüche 1 bis 3, **dadurch gekennzeichnet, dass** mindestens eine Messelektrode (1) eine Isolation (12) über ihre gesamte Längserstreckung ausgebildet aufweist und/oder dass eine Anschlussleitung (8) und ein Teil der Längserstreckung der Messelektrode (1) eine Schirmung (13) aufweist.

5. Anordnung nach einem der Ansprüche 1 bis 4, **dadurch gekennzeichnet, dass** die Signalverarbeitungselektronik (14) in einer galvanischen Trennung (15) angeordnet ist und/oder dass zwischen den Anschlussleitungen (8) der Messelektroden (1) und der Signalverarbeitungselektronik (14) eine Trennanordnung (19) angeordnet ist.

6. Verfahren zur Feuchtigkeitsmessung in Bauwerken entlang einer Messstrecke, bei welchem mittels eines Sensors ein Feuchtigkeitsmesswert ermittelt und verarbeitet wird, wobei ein kapazitiver Sensor, welcher mittels zweier parallel zueinander angeordneter längserstreckter Messelektroden (1) gebildet wird, entlang einer bis zu 100 m langen Messstrecke, welche eine Fuge (2) des Bauwerks ist, bereitgestellt wird, eine mit den Messelektroden (1) verbundene Signalverarbeitungselektronik zur Erzeugung von Kapazitätsmesswerten bereitgestellt wird, ein Vergleich zweier Kapazitätsmesswerte oder ein Vergleich eines Kapazitätsmesswerts mit einem Vergleichswert erfolgt und für den Fall, dass eine bei einem derartigen Vergleich ermittelte Differenz zweier Kapazitätsmesswerte einen vorgegebenen Wert überschreitet oder dass der Kapazitätsmesswert gleich oder größer als der Vergleichswert ist, ein Warnsignal erzeugt und ausgegeben wird **gekennzeichnet dadurch, dass** der kapazitive Sensor durch eine drahtförmige erste Messelektrode und eine elektrisch leitende Oberfläche einer Fugenfläche (3, 5) der Fuge (2) als zweite Messelektrode gebildet wird, wobei die drahtförmige erste Messelektrode parallel zu der Fugenfläche (3, 5) ausgerichtet bereitgestellt wird.

7. Verfahren nach Anspruch 6, **dadurch gekennzeichnet, dass** der kapazitive Sensor, welcher mittels zweier parallel zueinander angeordneter Messelektroden (1) gebildet wird, entlang oder in der Fuge (2) des Bauwerks bereitgestellt wird.

8. Verfahren nach Anspruch 6 oder 7, **dadurch gekennzeichnet, dass** der kapazitive Sensor, welcher mittels zweier parallel zueinander angeordneter Messelektroden (1) gebildet wird, während einer Bauphase des Bauwerks oder nachträglich in das Bauwerk eingebracht wird.

9. Verfahren nach einem der Ansprüche 6 bis 8, **dadurch gekennzeichnet, dass** mehrere kapazitive Sensoren mit ihren Messelektroden (1) entlang der Messstrecke in Kondensatorbereichen (10) angeordnet werden.

10. Verfahren nach einem der Ansprüche 6 bis 9, **dadurch gekennzeichnet, dass** das erzeugte Warnsignal und/oder erzeugte Messwerte der Feuchtigkeitsmessung über eine Mobilfunkverbindung als Sprachnachricht oder Textnachricht oder als Daten über eine WLAN- , NFC- oder Bluetooth Verbindung oder unter Nutzung eines des LPWAN-Standards an einen zentralen Server ausgegeben werden.

11. Verfahren nach einem der Ansprüche 6 bis 10, **dadurch gekennzeichnet, dass** die Signalverarbeitungselektronik (14) zur Messung von Kapazitäten (11) über die zugehörigen Messelektroden (1) mit einer galvanischen Trennung (15) bereitgestellt wird und somit von einer Verarbeitungseinheit (16) und einer Schnittstelle (17) galvanisch getrennt ist und/oder dass zwischen Anschlussleitungen (8) der Messelektroden (1) und der Signalverarbeitungselektronik (14) eine Trennanordnung (19) bereitgestellt wird.

## Claims

1. An arrangement for measuring moisture in buildings, which has a sensor and a means for signal processing, wherein the sensor is a capacitive sensor that is formed by means of two parallel elongate measuring electrodes (1) and is arranged along a measurement distance, which is up to 100 m in length and is a joint (2) of the building, and the means for signal processing comprises signal-processing electronics (14), which are connected to the measuring electrodes (1), a processing unit (16) and an interface (17), **characterised in that** a measuring electrode (1) is an electrically conductive surface of a joint face (3, 5) of the joint (2).

2. The arrangement according to Claim 1, **characterised in that** multiple capacitive sensors, which are each formed by means of two parallel measuring electrodes (1), are arranged successively along the measurement distance in associated capacitor regions (10a, 10b, 10c, 10d).

3. The arrangement according to Claim 1 or 2, **characterised in that** the interface (17) is an interface operating according to a mobile radio standard, a WLAN standard, a Bluetooth standard, an LPWAN standard or an NFC standard.

4. The arrangement according to one of Claims 1 to 3, **characterised in that** at least one measuring electrode (1) has insulation (12) formed over its entire length, and/or that a connection line (8) and a part of the length of the measuring electrode (1) has shielding (13).

5. The arrangement according to one of Claims 1 to 4, **characterised in that** the signal-processing electronics (14) are arranged in galvanic isolation (15), and/or that an isolating arrangement (19) is arranged between the connection lines (8) of the measuring electrodes (1) and the signal-processing electronics (14).

6. A method for measuring moisture in buildings along a measurement distance, in which a measured moisture value is determined by means of a sensor and processed, wherein a capacitive sensor, which is formed by means of two parallel elongate measuring electrodes (1), is provided along a measurement distance that is up to 100 m in length and is a joint (2) of the building, signal-processing electronics that are connected to the measuring electrodes (1) are provided to generate measured capacitance values, two measured capacitance values are compared or a measured capacitance value is compared with a comparative value, and, if a difference between two measured capacitance values determined during such a comparison exceeds a predefined value, or if the measured capacitance value is greater than or equal to the comparative value, a warning signal is generated and output, **characterised in that** the capacitive sensor is formed by a wire-like first measuring electrode and an electrically conductive surface of a joint face (3, 5) of the joint (2) as the second measuring electrode, wherein the wire-like first measuring electrode is provided such that it is oriented parallel to the joint face (3, 5).

7. The method according to Claim 6, **characterised in that** the capacitive sensor that is formed by means of two parallel measuring electrodes (1) is provided along or in the joint (2) of the building.

8. The method according to Claim 6 or 7, **characterised in that** the capacitive sensor that is formed by means of two parallel measuring electrodes (1) is introduced into the building during a construction phase of the building or subsequently.

9. The method according to one of Claims 6 to 8, **characterised in that** multiple capacitive sensors are arranged with their measuring electrodes (1) in capacitor regions (10) along the measurement distance.

10. The method according to one of Claims 6 to 9, **characterised in that** the generated warning signal and/or generated measured values of the moisture measurement are output to a central server via a mobile radio connection as a voice message or text message or as data via a WLAN, NFC or Bluetooth connection or using an LPWAN standard.

11. The method according to one of Claims 6 to 10, **characterised in that** the signal-processing electronics (14) for measuring capacitances (11) via the associated measuring electrodes (1) are provided with galvanic isolation (15) and are thus galvanically isolated from a processing unit (16) and an interface (17), and/or that an isolating arrangement (19) is provided between connection lines (8) of the measuring electrodes (1) and the signal-processing electronics (14).

## Revendications

1. Dispositif de mesure de l'humidité dans des bâtiments, qui présente un capteur et un moyen de traitement des signaux, le capteur étant un capteur capacitif qui est formé au moyen de deux électrodes de mesure (1) s'étendant longitudinalement et disposées parallèlement l'une à l'autre et qui est disposé le long d'une distance de mesure pouvant atteindre 100 m, qui est un joint (2) du bâtiment, le moyen de traitement des signaux comprenant une électronique de traitement des signaux (14) reliée aux électrodes de mesure (1), une unité de traitement (16) et une interface (17), **caractérisé en ce qu'**une électrode de mesure (1) est une surface électriquement conductrice d'une surface de joint (3, 5) du joint (2).

2. Dispositif selon la revendication 1, **caractérisé en ce que** plusieurs capteurs capacitifs, qui sont formés chacun au moyen de deux électrodes de mesure (1) disposées parallèlement l'une à l'autre, sont disposés l'un après l'autre le long de la distance de mesure dans des zones de condensateur (10a, 10b, 10c, 10d) associées.

3. Dispositif selon la revendication 1 ou 2, **caractérisé en ce que** l'interface (17) est une interface fonctionnant selon une norme de téléphonie mobile, une norme WLAN, une norme Bluetooth, une norme LPWAN ou une norme NFC.

4. Dispositif selon l'une des revendications 1 à 3, **caractérisé en ce qu'**au moins une électrode de mesure (1) présente une isolation (12) formée sur toute son étendue longitudinale et/ou **en ce qu'**une ligne de raccordement (8) et une partie de l'étendue longitudinale de l'électrode de mesure (1) présentent un blindage (13).

5. Dispositif selon l'une des revendications 1 à 4, **caractérisé en ce que** l'électronique de traitement des signaux (14) est disposée dans une séparation galvanique (15) et/ou **en ce qu'**un dispositif de séparation (19) est disposé entre les lignes de raccordement (8) des électrodes de mesure (1) et l'électronique de traitement des signaux (14).

6. Procédé de mesure de l'humidité dans des bâtiments le long d'une distance de mesure, dans lequel une valeur de mesure de l'humidité est déterminée au moyen d'un capteur et traitée, un capteur capacitif, qui est formé au moyen de deux électrodes de mesure (1) s'étendant longitudinalement et disposées parallèlement l'une à l'autre, étant prévu le long d'une distance de mesure pouvant atteindre 100 m, qui est un joint (2) du bâtiment, une électronique de traitement des signaux reliée aux électrodes de mesure (1) étant prévue pour générer des valeurs de mesure de capacité, une comparaison de deux valeurs de mesure de capacité ou une comparaison d'une valeur de mesure de capacité avec une valeur de comparaison étant effectuée et, dans le cas où une différence entre deux valeurs de mesure de capacité déterminée lors d'une telle comparaison dépasse une valeur prédéterminée ou la valeur de mesure de capacité est égale ou supérieure à la valeur de comparaison, un signal d'avertissement est généré et émis, **caractérisé en ce que** le capteur capacitif est formé par une première électrode de mesure en forme de fil et une surface électriquement conductrice d'une surface de joint (3, 5) du joint (2) en tant que deuxième électrode de mesure, la première électrode de mesure en forme de fil étant prévue alignée parallèlement à la surface de joint (3, 5).

7. Procédé selon la revendication 6, **caractérisé en ce que** le capteur capacitif, qui est formé au moyen de deux électrodes de mesure (1) disposées parallèlement l'une à l'autre, est prévu le long ou dans le joint (2) du bâtiment.

8. Procédé selon la revendication 6 ou 7, **caractérisé en ce que** le capteur capacitif, qui est formé au moyen de deux électrodes de mesure (1) disposées parallèlement l'une à l'autre, est mis en place pendant une phase de construction du bâtiment ou ultérieurement dans le bâtiment.

9. Procédé selon l'une des revendications 6 à 8, **caractérisé en ce que** plusieurs capteurs capacitifs sont disposés avec leurs électrodes de mesure (1) le long de la distance de mesure dans des zones de condensateur (10).

10. Procédé selon l'une des revendications 6 à 9, **caractérisé en ce que** le signal d'avertissement généré et/ou les valeurs de mesure générées de la mesure de l'humidité sont émises vers un serveur central via une connexion de téléphonie mobile sous forme de message vocal ou de message texte ou sous forme de données via une connexion WLAN, NFC ou Bluetooth ou en utilisant une norme LPWAN.

11. Procédé selon l'une des revendications 6 à 10, **caractérisé en ce que** l'électronique de traitement des signaux (14) est prévue pour mesurer des capacités (11) par l'intermédiaire des électrodes de mesure (1) associées avec une séparation galvanique (15) et est ainsi séparée galvaniquement d'une unité de traitement (16) et d'une interface (17) et/ou **en ce qu'**un dispositif de séparation (19) est prévu entre des lignes de raccordement (8) des électrodes de mesure (1) et l'électronique de traitement des signaux (14).
